# EUROPÄISCHE PATENTANMELDUNG

(11) **EP 0 895 921 A1**
(43) Veröffentlichungstag der Anmeldung: **10.02.1999**
(21) Anmeldenummer: 98111583.5
(22) Anmeldetag: 24.06.1998
(51) Int. Cl.: B62B 3/14

(54) **Stapelbarer Einkaufswagen**

(30) Priorität: 07.08.1997 DE 19734153
(71) Anmelder: WANZL METALLWARENFABRIK GMBH, D-89336 Leipheim (DE)
(72) Erfinder: Blaha, Martin, 89335 Ichenhausen (DE)

(57) **Zusammenfassung**

Die Erfindung betrifft einen stapelbaren Einkaufswagen (1), mit einem Fahrgestell (2), das zwei nach oben gerichtete Träger (6) aufweist, die zum Tragen eines mit einer schwenkbaren Rückwand (10) ausgestatteten Korbes (9) bestimmt sind, wobei der Korb (9) mit seitlich angeordneten Stützauflagen (13) auf den Trägern (6) aufliegt, mit seinem unteren hinteren Rand (14) zwei ortsfest angeordnete hakenförmige Abschnitte (19) hintergreift und mit Hilfe von Sicherungsmitteln (20) auf den Trägern (6) arretiert ist und wobei eine die Träger (6) verbindende Stützeinrichtung (16) vorgesehen ist, auf welcher der Korb (9) zusätzlich abgestützt ist.

Es ist vorgesehen die hakenförmigen Abschnitte (19) an der Stützeinrichtung (16) anzuordnen.

## Beschreibung

Die Erfindung betrifft einen stapelbaren Einkaufswagen, mit einem Fahrgestell, das zwei nach oben gerichtete Träger aufweist, die zum Tragen eines mit einer schwenkbaren Rückwand ausgestatteten Korbes bestimmt sind, wobei der Korb mit seitlich angeordneten Stützauflagen auf den Trägern aufliegt, mit seinem unteren hinteren Rand zwei ortsfest angeordnete hakenförmige Abschnitte hintergreift und mit Hilfe von Sicherungsmitteln auf den Trägern arretiert ist und wobei eine die Träger verbindende Stützeinrichtung vorgesehen ist, auf welcher der Korb zusätzlich abgestützt ist.

Bei bekannten Einkaufswagen sind an der oberen Begrenzung der Träger aus Flachstahl bestehende Tragstücke hochkant angeordnet und die Körbe liegen mit ihren Stützauflagen auf den Tragstücken auf. Diese Bauweise erlaubt ein getrenntes Herstellen und Bereithalten der Fahrgestelle und der Körbe. Auch läßt diese Anordnung eine getrennte Oberflächenbehandlung dieser Bauteile zu. Ferner können baukastenartig z.B. verschieden große Körbe auf gleiche Fahrgestelle montiert werden und schließlich lassen sich auch beschädigte Körbe von, Fahrgestell abnehmen und durch neue ersetzen.

Im Sinne einer Reduzierung der Herstellkosten besteht die Aufgabe der Erfindung darin, bei einem gattungsgemäßen Einkaufswagen die Art der Verbindung zwischen Fahrgestell und Korb zu vereinfachen.

Als Lösung der Aufgabe wird vorgeschlagen, die hakenförmigen Abschnitte an der Stützeinrichtung anzuordnen.

Durch diese Maßnahme sind die bisher verwendeten, als Stanzteile gestalteten Tragstücke nicht mehr erforderlich. Die ohnehin vorhandene Stützeinrichtung übernimmt nun einen Teil der Funktion der bisherigen Tragstücke. Die restliche Funktion wird auf die Träger übertragen. Auf diese Weise läßt sich eine erhebliche Kostenersparnis bei der Herstellung von Einkaufswagen erzielen. Die Einsparung wiegt umso mehr, da es sich bei Einkaufswagen uni Massenartikel handelt.

Die Erfindung wird anhand eines Ausführungsbeispieles näher erläutert.

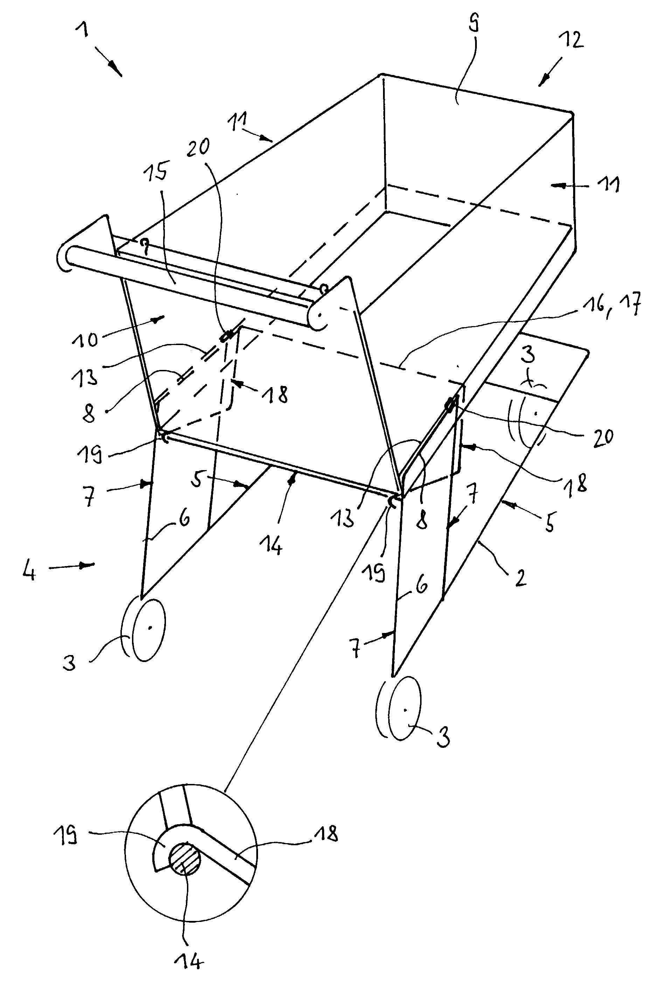

Die Zeichnung zeigt einen Einkaufswagen 1 der allgemein bekannten Art. Das mit vier Fahrrollen 3 ausgestattete Fahrgestell 2 ist an seinem hinteren Bereich 4 zu beiden Längsseiten 5 mit nach oben gerichteten Trägern 6 ausgestattet, die zum Tragen eines Korbes 9 bestimmt sind. Der Korb 9 ist in bekannter Weise mit einer in das Korbinnere verschwenkbaren Rückwand 10 ausgestattet und schließt nach hinten mit einer Schiebeeinrichtung 15 ab. Alle bis hierher beschriebenen Komponenten sind in ebenfalls bekannter Weise so gestaltet, daß sich derartige Einkaufswagen 1 in Reihen platzsparend stapeln lassen. Die Träger 6 bestehen aus starkem Draht und sind bevorzugt aus einem Stück gefertigt. Die nach unten gerichteten Stützen 7 sind nach oben verbunden, so daß an jedem Träger 6 eine Schulter 8 gebildet ist, auf welchen der Korb 9 mit seitlich angeordneten Stützauflagen 13 aufliegt. Die Stützauflagen 13 sind gewöhnlich durch einen annähernd horizontal angeordneten Draht gebildet, der die Längsseiten 11 und die Stirnseite 12 des Korbes 9 umfaßt. Die Träger 6 sind in ihren, oberen Bereich durch eine Stützeinrichtung 16 verbunden, auf deren Querstück 17 der Korb 9 mit seinem Boden zusätzlich abgestützt ist. Seitenbereiche 18 der bevorzugt aus starkem Draht mit rundem Querschnitt gefertigten Stützeinrichtung 16 sind mit den Trägern 6 verschweißt, so daß das Fahrgestell 2 einen stabilen geschlossenen Rahmen bildet. Die Seitenbereiche 18 der Stützeinrichtung 16 sind entweder an den Innen- oder an den Außenseiten der Träger 6 angeordnet. Die beiden an die Seitenbereiche 18 sich anschließenden Enden der Stützeinrichtung 16 sind als hakenartige Abschnitte 19 gestaltet, die vom unteren hinteren Rand 14 des Korbes 9 hintergriffen werden. Der hintere Rand des Korbes 9 ist gewöhnlich durch einen in sich geschlossenen Drahtabschnitt gebildet, der eine durch die Rückwand 10 verschließbare rechteckige Öffnung entstehen läßt. Die in der Zeichnung dargestellte Einzelheit läßt einen hakenartigen Abschnitt 19 der Stützeinrichtung 16 sowie den unteren hinteren Rand 14 des Korbes 9 deutlich erkennen. Diese Art der Verbindung sowie je ein bevorzugt als Klammer gestaltetes Sicherungsmittel 20, das jeweils eine Schulter 8 der Träger 6 und eine Stützauflage 13 des Korbes 9 umgreift, erlaubt ein sicheres ortsfestes Arretieren des Korbes 9 auf den Trägern 6. Beim Aufsetzen des Korbes 9 auf die Träger 6 wird der Korb 9 schräg nach oben gehalten und mit den, unteren hinteren Rand 14 in beide Vertiefungen der hakenartigen Abschnitte 19 eingefügt. Anschließend wird der Korb 9 nach vorne so weit abgesenkt, bis dieser mit seinen Stützauflagen 13 auf den Schultern 8 der Träger 6 satt aufliegt. Durch das nachfolgende Verklammern der Stützauflagen 13 mit den Schultern 8 der Träger 6 ist der Korb 9 mit dem Fahrgestell sicher verbunden. Das Verklammern erfolgt durch die Sicherungsmittel 20.

## Patentansprüche

1. Stapelbarer Einkaufswagen (1), mit einem Fahrgestell (2), das zwei nach oben gerichtete Träger (6) aufweist, die zum Tragen eines mit einer schwenkbaren Rückwand (10) ausgestatteten Korbes (9) bestimmt sind, wobei der Korb (9) mit seitlich angeordneten Stützauflagen (13) auf den Trägern (6) aufliegt, mit seinem unteren hinteren Rand (14) zwei ortsfest angeordnete hakenförmige Abschnitte (19) hintergreift und mit Hilfe von Sicherungsmitteln (20) auf den Trägern (6) arretiert ist und wobei eine die Träger (6) verbindende Stützeinrichtung (16) vorgesehen ist, auf welcher der Korb (9) zusätzlich abgestützt ist, dadurch **gekennzeichnet,** daß die hakenförmigen Abschnitte (19) an der Stützeinrichtung (16) angeordnet sind.

2. Stapelbarer Einkaufswagen (1) nach Anspruch 1, dadurch **gekennzeichnet,** daß die Stützeinrichtung (16) Seitenbereiche (18) aufweist und daß die Seitenbereiche (18) entweder an der Innen- oder an der Außenseite der Träger (6) angeordnet sind.

3. Stapelbarer Einkaufswagen (1) nach Anspruch 1 oder 2, dadurch **gekennzeichnet,** daß sich den Seitenbereichen (18) die beiden hakenartigen Abschnitte (19) anschließen.

4. Stapelbarer Einkaufswagen (1) nach einem der Ansprüche 1 bis 3, dadurch **gekennzeichnet,** daß die Stützeinrichtung (16) aus einem Draht mit rundem Querschnitt gefertigt ist.
